(19) Europäisches Patentamt
European Patent Office
Office européen des brevets

(11) **EP 2 174 868 B1**

(12) **FASCICULE DE BREVET EUROPEEN**

(45) Date de publication et mention
de la délivrance du brevet:
**07.09.2011   Bulletin 2011/36**

(51) Int Cl.:
**B64C 27/08** *(2006.01)*   **B64C 27/12** *(2006.01)*

(21) Numéro de dépôt: **09012139.3**

(22) Date de dépôt: **24.09.2009**

(54) **Dispositif d'entraînement des premier et deuxième rotors de sustentation d'un giravion birotor en tandem**

Vorrichtung zum Antrieb des ersten und zweiten Hauptrotors eines Tragschraubers mit zwei in Tandem angeordneten Hauptrotoren

Device for driving first and second main rotors of a tandem birotor helicopter

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **07.10.2008   FR 0805517**

(43) Date de publication de la demande:
**14.04.2010   Bulletin 2010/15**

(73) Titulaire: **EUROCOPTER
13725 Marignane cedex (FR)**

(72) Inventeurs:
• **Thomassey, Lionel
13270 Fos sur mer (FR)**

• **Magre, Eric
13330 Pelissanne (FR)**

(74) Mandataire: **GPI & Associés
1330, rue Guillibert de la Lauzière
EuroParc de Pichaury, Bât B2
13856 Aix en Provence Cedex 3 (FR)**

(56) Documents cités:
**FR-A- 1 419 069      FR-A- 2 644 134
GB-A- 889 024         US-A- 4 976 669
US-A- 6 065 718       US-A1- 2002 104 922**

## Description

La présente invention concerne un dispositif d'entraînement des premier et deuxième rotors de sustentation d'un giravion birotor en tandem.

En effet, un aéronef peut-être équipé de deux rotors de sustentation assurant sa sustentation et sa propulsion. Dans le cas d'un giravion, ces deux rotors peuvent être agencés l'un derrière l'autre suivant l'axe longitudinal dudit giravion : on parle alors d'un giravion birotor en tandem. Classiquement, chaque rotor d'un giravion birotor est entraîné par une boîte de transmission principale (BTP). Les boîtes de transmission principale, entraînées par une motorisation appropriée, ont pour fonction de réduire la vitesse de rotation entre une source de puissance et un rotor dans un rapport de l'ordre de 10 à 100.

Chaque rotor comprend une pluralité de pales fixées sur un moyeu permettant la sustentation et la propulsion, du giravion. Néanmoins, lors de sa rotation, un rotor entraîné par une boîte de transmission soumet le giravion à un couple en lacet important. Sur un giravion monorotor, ce couple est généralement contrecarré par un rotor anticouple agencé à l'arrière de la poutre de queue.

Dans le cas d'un giravion birotor en tandem, les premier et deuxième rotors de sustentation sont généralement contrarotatifs afin que le couple en lacet généré dans un sens par le premier rotor, soit fortement réduit, voir annulé, par le couple en lacet généré dans l'autre sens par le deuxième rotor. L'effet conjugué du couple en lacet de chaque rotor permet ainsi de stabiliser le giravion par rapport à son axe de lacet en vol rectiligne, sans vent.

Lorsque chaque rotor d'un giravion birotor en tandem est en rotation, leurs pales effectuent un mouvement circulaire décrivant une surface dénommée « disque rotor ». Si les rotors ne sont pas suffisamment écartés l'un de l'autre, les pales du premier rotor peuvent entrer en collision avec les pales du deuxième rotor, entraînant ainsi leur destruction et consécutivement la destruction du giravion.

Il semble donc logique d'écarter le premier rotor du deuxième rotor. Néanmoins, en pratique, il est très difficile d'écarter les rotors pour éviter tout incident.

En effet, il faudrait pour cela augmenter la taille de la cellule du giravion, ce qui alourdirait ce giravion. Par suite, pour compenser l'accroissement de la masse de l'appareil, il conviendrait d'implémenter une installation motrice plus puissante et d'augmenter la surface des pales de chaque rotor afin d'accroitre leur portance.

S'il s'avère impossible d'écarter les rotors l'un de l'autre, on pourrait envisager de décaler en hauteur le premier rotor par rapport au deuxième rotor. Il est à noter que le premier et le deuxième rotors sont généralement décalés verticalement l'un par rapport à l'autre pour des raisons aérodynamiques. Toutefois, les disques rotors étant inclinables pour manoeuvrer le giravion, il est quasiment impossible de suffisamment décaler en hauteur les premier et deuxième rotors pour éviter les risques d'interférences entre leurs pales.

Classiquement sur un giravion birotor en tandem, les rotors ne sont pas suffisamment écartés, longitudinalement et verticalement, pour éviter une interférence entre les disques rotors si aucune disposition particulière n'est prise. Par suite, les première et deuxième boîtes de transmission principale sont reliées entre-elles par un moyen de liaison mécanique, permettant de synchroniser la vitesse de rotation des rotors pour garantir que les pales ne se heurtent pas. On dit alors que les pales sont engrenantes car les pales en rotation du premier rotor présentent un déphasage en azimut constant par rapport aux pales en rotation du deuxième rotor.

Dans la suite du document, le terme chaîne cinématique désigne l'ensemble des pièces en rotation situées entre la motorisation et les pales des premier et deuxième rotors.

Dans ces conditions et à propos des rotors à vitesses de rotation synchronisées, diverses solutions sont connues pour assurer la liaison entre les première et deuxième boîtes de transmission principale d'un giravion birotor en tandem.

Une première solution est mise en oeuvre dans le document US2002104922 sur un giravion comportant quatre rotors. Un arbre de transmission, comportant une première et une deuxième extrémités suivant son axe longitudinal, est entraîné par un moteur. Les première et deuxième extrémités de l'arbre de transmission entraînent simultanément et respectivement les première et deuxième boîtes de transmission principale, chaque boîte de transmission principale entraînant simultanément deux rotors.

Cette première solution permet de réaliser une très bonne synchronisation mécanique entre les rotors de sorte que les pales de chaque rotor ne peuvent rentrer en collision. Néanmoins, si l'arbre de transmission vient à rompre, au moins un rotor ne sera plus entraîné ce qui est susceptible de conduire à un accident du giravion. De plus, si le moteur est arrêté, la chaîne cinématique n'est plus entraînée ce qui est susceptible également de provoquer un accident du giravion.

Une deuxième solution est décrite dans le document US6065718 qui présente un giravion comportant un premier et un deuxième ensembles mécaniques. Les premier et deuxième ensembles mécaniques comportent respectivement un premier et un deuxième moteurs entraînant un premier et un deuxième rotors via un premier et un deuxième organes de transmission. Les deux organes de transmission sont reliés entre eux par un arbre de transmission permettant de réaliser la synchronisation des premier et deuxième rotors. Cette deuxième solution permet aux rotors d'être synchronisés, les pales ne risquant donc pas de se heurter. Néanmoins, les inconvénients mentionnés précédemment semblent perdurer avec cette deuxième solution.

Nonobstant les inconvénients précités, l'utilisation d'un seul arbre de transmission ne permet pas d'atteindre les objectifs de certification requis par les organismes délivrant les autorisations de vol pour les aéronefs civils. Ce constat explique en partie la raison pour laquelle les giravions birotors connus sont des appareils militaires, qui ne sont pas soumis aux normes civiles exigeantes en termes de sécurité.

Une troisième solution détaillée dans le document US4976669 illustre un giravion comportant deux rotors entraînés par un moteur au moyen d'un ensemble d'engrenages au lieu d'un arbre de transmission. Tout en synchronisant les rotors permettant aux pales de ne pas se toucher, l'ensemble d'engrenages améliore la fiabilité de la transmission de puissance. Cependant, l'ensemble d'engrenages nécessite un important approvisionnement en lubrifiant, tel que de l'huile, afin d'assurer un fonctionnement sans blocages. De plus, la distance séparant les premier et deuxième rotors pouvant être importante, cette troisième solution nécessite un nombre important d'engrenages, pouvant fortement pénaliser la masse et la fiabilité du giravion du fait du nombre important de composants.

Par ailleurs, dans le but d'optimiser la sécurité d'une telle transmission, il est intéressant de rigidifier la chaîne cinématique. Précisément, le document US6364249B1 décrit l'agencement d'une motorisation par rapport à un organe de transmission d'un giravion, la motorisation et la transmission étant intégrées dans un carter de protection de l'organe de transmission. L'ensemble motorisation/organe de transmission bénéficie ainsi de la rigidité du carter de l'organe de transmission.

L'invention vise à remédier aux inconvénients relatifs aux trois premières solutions précitées en garantissant la sécurité, la fiabilité de fonctionnement et les performances d'un giravion birotor pour permettre sa certification civile.

A cet effet, l'invention concerne un dispositif d'entraînement d'un premier et d'un deuxième rotors de sustentation d'un giravion birotor, ledit dispositif étant muni d'une première et d'une deuxième boîtes de transmission principale pourvues respectivement d'un premier et d'un deuxième organes de transmission aptes à mettre en rotation lesdits premier et deuxième rotors, ledit dispositif comportant au moins un moteur pour entraîner lesdits premier et deuxième organes de transmission.

L'invention est remarquable en ce que le dispositif comporte un moyen de liaison muni d'un premier et d'un deuxième arbres de transmission pour synchroniser lesdits premier et deuxième organes de transmission, ladite première boîte de transmission principale étant pourvue d'un premier moyen de conjugaison de puissance d'une part en prise avec ledit premier organe de transmission et d'autre part mécaniquement lié audit premier arbre de transmission et audit deuxième arbre de transmission, ladite deuxième boîte de transmission principale étant pourvue d'un deuxième moyen de conjugaison de puissance d'une part en prise avec ledit deuxième organe de transmission et d'autre part mécaniquement lié audit premier arbre de transmission et audit deuxième arbre de transmission.

Par suite, le premier arbre de transmission est lié par ses première et deuxième extrémités respectivement aux premier et deuxième moyens de conjugaison de puissance.

De même, le deuxième arbre de transmission est lié par ses première et deuxième extrémités respectivement aux premier et deuxième moyens de conjugaison de puissance.

Ainsi, les premier et deuxième moyens de conjugaison de puissance sont synchronisés via les premier et deuxième arbres de transmission. Il en va naturellement pareillement des premier et deuxième organes de transmission et donc des premier et deuxième rotors.

L'invention va alors à l'encontre des préjugés existants, selon lesquels l'on ne pouvait synchroniser les rotors d'un giravion birotor que via un unique arbre.

Au contraire, l'invention présente une solution innovante permettant de mettre en oeuvre deux arbres de transmission de manière à respecter les exigences de certification, notamment en termes d'exigences de sécurité, la rupture d'un arbre de transmission n'étant plus catastrophique.

Contrairement à ce que l'on pouvait penser, l'implémentation d'un premier et d'un deuxième arbres de transmission n'entraîne ni un accroissement de masse rédhibitoire ni un encombrement irraisonnable, et ne génère pas de perturbations notables, les premier et deuxième arbres de transmission n'étant pas à l'origine de vibrations néfastes par exemple.

En effet, on verra par la suite, que l'invention permet d'utiliser des arbres de transmission ayant des dimensions réduites, optimisées en fonction du nombre et de la position des moteurs, par rapport aux arbres de transmission uniques suggérés par l'état de la technique, ce qui permet d'optimiser notamment la masse et l'encombrement des premier et deuxième arbres de transmission.

Par ailleurs, le dispositif d'entraînement comporte une ou plusieurs des caractéristiques additionnelles qui suivent.

Avantageusement, au moins un arbre de transmission comporte plusieurs tronçons.

Ainsi, il est plus aisé de s'adapter à l'architecture du giravion, chaque arbre de transmission pouvant comporter par exemple deux tronçons non alignés liés mécaniquement par des moyens usuels et présentant une angulation entre eux.

Par exemple, si l'arbre de transmission est un arbre de type supercritique, il peut comporter deux ou trois tronçons munis chacun d'un amortisseur.

A contrario, on peut prévoir un plus grand nombre de tronçons dans le cadre d'un arbre de type subcritique.

En outre, si un arbre de transmission venait à rompre tout en étant entraîné en rotation par les moyens de conjugaison de puissance, il risquerait d'endommager les éléments environnants.

Ainsi, selon un premier mode de réalisation, le dispositif d'entraînement comporte un moyen de retenue d'au moins un arbre de transmission.

Par exemple, un moyen de retenue comporte une pluralité de paliers répartis le long du premier arbre de transmission. De même, un autre moyen de retenu peut posséder des paliers pour maintenir en position le deuxième arbre de transmission.

Selon un deuxième mode de réalisation, le dispositif d'entraînement comporte au moins un système de désaccouplement d'urgence, avantageusement réversible, chaque système de désaccouplement d'urgence étant muni d'un ensemble mécanique agencé entre une extrémité d'un arbre de transmission et le moyen de conjugaison de puissance associé pour lier mécaniquement ledit arbre de transmission audit moyen de conjugaison de puissance dans un mode de fonctionnement accouplé.

On note que le dispositif d'entraînement se trouve dans un mode de fonctionnement accouplé quand les pièces de ce dispositif sont fonctionnellement en bon état.

Eventuellement, le dispositif d'entraînement comporte quatre systèmes de désaccouplement d'urgence agencés respectivement:

- entre une première extrémité du premier arbre de transmission et le premier moyen de conjugaison de puissance,

- entre une deuxième extrémité du premier arbre de transmission et le deuxième moyen de conjugaison de puissance,

- entre une première extrémité du deuxième arbre de transmission et le premier moyen de conjugaison de puissance, et

- entre une deuxième extrémité du deuxième arbre de transmission et le deuxième moyen de conjugaison de puissance.

Ainsi, si le premier arbre de transmission, ou un de ses tronçons le cas échéant, venait à se scinder en deux parties, le système de désaccouplement d'urgence pourrait désaccoupler le premier arbre de transmission du premier et/ou du deuxième moyen de conjugaison de puissance pour que lesdites parties ne soient plus entraînées en rotation. Il en va de même pour le deuxième arbre de transmission.

Chaque ensemble mécanique est alors optionnellement pourvu d'un accouplement par interférences de forme, réversible, et d'un arbre de liaison.

Par suite, le système de désaccouplement d'urgence peut comporter un moyen de commande et un moyen de détection de la rupture d'un arbre de transmission, tel qu'un capteur de vibration, le moyen de commande ordonnant à l'ensemble mécanique, par exemple à son accouplement par interférences de forme, de ne plus lier mécaniquement l'arbre de transmission à un moyen de conjugaison de puissance en cas de rupture dudit arbre de transmission.

Il est à noter que les premier et deuxième modes de réalisation sont combinables.

Par ailleurs, pour entraîner les premier et deuxième rotors, il est possible de prévoir une ou plusieurs des caractéristiques suivantes :

- au moins un moteur entraîne en rotation ledit ensemble mécanique d'un système de désaccouplement d'urgence qui met en mouvement le moyen de conjugaison de puissance auquel cet ensemble mécanique est mécaniquement lié,

- au moins un moteur entraîne en rotation un moyen de conjugaison de puissance qui met à son tour en mouvement lesdits premier et deuxième arbres de transmission, et

- au moins un moteur entraîne en rotation un arbre de transmission qui met en mouvement lesdits premier et deuxième moyens de conjugaison de puissance.

En outre, au moins un premier et un deuxième moteurs entraînant lesdits premier et deuxième organes de transmission, ledit premier moteur met en mouvement ledit premier organe de transmission en entrainant directement un premier élément mécanique comprenant soit un ensemble mécanique d'un système de désaccouplement d'urgence agencé à une première extrémité d'un arbre de transmission soit ledit premier moyen de conjugaison de puissance ou soit ledit premier arbre de transmission, ledit deuxième moteur mettant en mouvement ledit deuxième organe de transmission en entrainant directement un deuxième élément mécanique comprenant soit un ensemble mécanique d'un système de désaccouplement d'urgence agencé à une deuxième extrémité d'un arbre de transmission soit ledit deuxième moyen de conjugaison de puissance ou soit ledit deuxième arbre de transmission.

De plus, au moins un moteur entraînant lesdits premier et deuxième organes de transmission via un élément mécanique comprenant un ensemble mécanique d'un système de désaccouplement d'urgence, un moyen de conjugaison de puissance ou un arbre de transmission, un réducteur muni d'une roue libre est agencé entre ledit moteur et ledit élément mécanique.

Ainsi, on peut par exemple envisager, selon une première variante, qu'un premier moteur entraîne un premier réducteur lié à un premier moyen de conjugaison de puissance et qu'un deuxième moteur entraîne un deuxième réducteur lié à un deuxième moyen de conjugaison de puissance.

Selon une deuxième variante, un premier moteur entraîne la première extrémité du premier arbre de transmission en prise avec le premier moyen de conjugaison de puissance et alors qu'un deuxième moteur entraîne la première extrémité du deuxième arbre de transmission en prise avec le premier moyen de conjugaison de puissance.

Selon une troisième variante, chaque arbre de transmission comportant successivement une première extrémité, une zone médiane puis une deuxième extrémité, un premier moteur entraîne un premier réducteur en prise avec la zone médiane du premier arbre et un deuxième moteur entraîne un deuxième réducteur en prise avec la zone médiane du deuxième arbre.

On comprend bien que les combinaisons précédentes ne sont pas limitatives, les deuxième et troisième variantes pouvant être notamment cumulées.

Au moins un premier et un deuxième moteurs entraînant lesdits premier et deuxième organes de transmission, ledit premier moteur met en mouvement ledit premier organe de transmission en entrainant un premier élément mécanique, comprenant soit un ensemble mécanique d'un système de désaccouplement d'urgence agencé à une première extrémité d'un arbre de transmission soit ledit premier moyen de conjugaison de puissance ou soit ledit premier arbre de transmission via un premier réducteur, ledit deuxième moteur mettant en mouvement ledit deuxième organe de transmission en entrainant un deuxième élément mécanique, comprenant soit un ensemble mécanique d'un système de désaccouplement d'urgence agencé à une deuxième extrémité d'un arbre de transmission soit ledit deuxième moyen de conjugaison de puissance ou soit ledit deuxième arbre de transmission via un deuxième réducteur.

Suivant une caractéristique technique additionnelle, chaque boîte de transmission principale comporte un carter entourant son organe de transmission et son moyen de conjugaison de puissance pour la rigidifier.

Par ailleurs, l'organe de transmission d'une boîte de transmission principale étant entraîné par un moteur via un réducteur muni d'une roue libre, ce réducteur est avantageusement agencé à l'intérieur du carter de cette boite de transmission principale, le moteur étant alors fixé sur ce carter pour optimiser la rigidité de l'ensemble.

L'invention et ses avantages apparaîtront avec plus de détails dans le cadre de la description suivante, qui illustre des exemples de réalisation préférés, donnés sans aucun caractère limitatif, en référence aux figures annexées qui représentent :

- la figure 1, une vue de dessus d'un giravion birotor en tandem explicitant la problématique,

- la figure 2, une vue schématique du principe de fonctionnement du dispositif d'entraînement selon l'invention,

- la figure 3, une vue schématique d'un premier mode de réalisation de l'invention,

- la figure 4, une vue schématique d'un deuxième mode de réalisation de l'invention,

- la figure 5, une vue schématique d'une première variante d'un dispositif d'entraînement,

- la figure 6, une vue schématique d'une deuxième variante d'un dispositif d'entraînement,

- la figure 7, une vue schématique d'une troisième variante d'un dispositif d'entraînement.

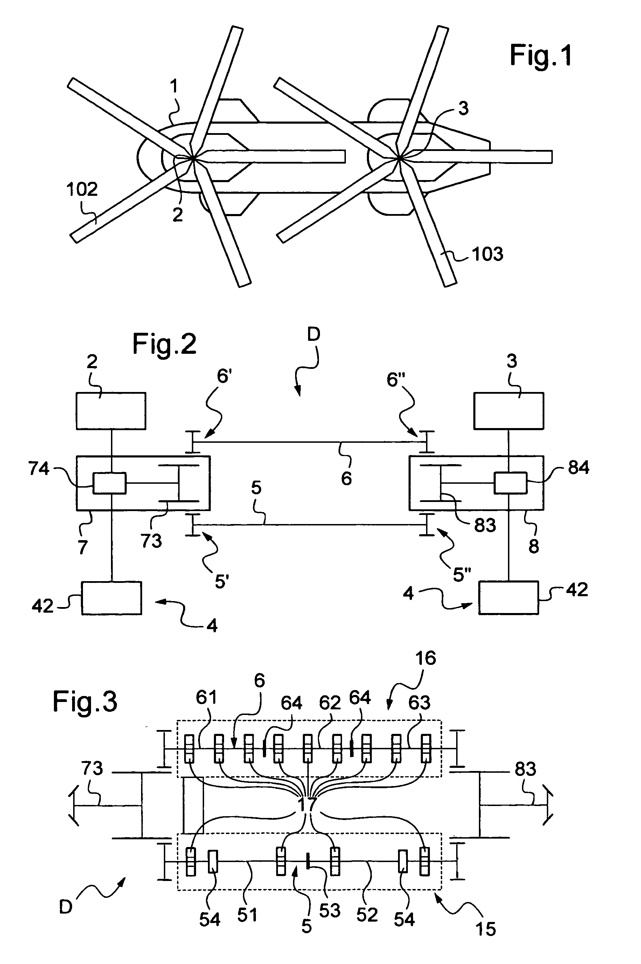

La figure 1 illustre un giravion 1 birotor, plus précisément un hélicoptère birotor en tandem. Pour assurer sa sustentation et sa propulsion, le giravion 1 birotor en tandem comporte un premier rotor 2 et un deuxième rotor 3. Le premier rotor 2 et le deuxième rotor 3 sont contrarotatifs et comportent le même nombre de pales 102 et 103. Les pales 102 du premier rotor 2 et les pales 103 du deuxième rotor 3 doivent être engrenantes afin de ne pas se heurter en vol. Par suite, le premier rotor 2 et le deuxième rotor 3 doivent être synchrones de façon à tourner à la même vitesse de rotation. On comprend bien qu'un différentiel de vitesse entre ces premier et deuxième rotors entraînerait un contact direct entre les pales 102 et 103 des premier et deuxième rotors 2 et 3.

La figure 2 présente alors les éléments d'un dispositif D d'entraînement des premier et deuxième rotors 2 et 3 du giravion 1. Une installation motrice 4, pourvue d'un premier et d'un deuxième moteurs 41, 42, met en mouvement une première boîte de transmission principale 7 et une deuxième boîte de transmission principale 8, la première boîte de transmission principale 7 et la deuxième boîte de transmission principale 8 entraînant respectivement le premier rotor 2 et le deuxième rotor 3.

De plus, un premier arbre de transmission 5 et un deuxième arbre de transmission 6 sont disposés en parallèle entre la première boîte de transmission principale 7 et la deuxième boîte de transmission principale 8, pour synchroniser en rotation le premier rotor 2 et le deuxième rotor 3 de telle sorte que les pales 102 et 103 présentent un déphasage constant quelque soit leurs azimuts. En effet, de part le moyen de liaison constitué notamment des premier et deuxième arbres de transmission 5, 6, les première et deuxième boîtes de transmission 7, 8 tournent à la même vitesse de rotation. De même, les premier et deuxième rotors 2, 3 tournent à la même vitesse de rotation.

Les première et deuxième boîtes de transmission principale 7, 8 comportent respectivement des premier et deuxième moyens de conjugaison de puissance 73, 83 pour sommer la puissance développée par les premier et deuxième arbres de transmission 5, 6. On considère à titre d'exemple que le premier moyen de conjugaison de puissance 73 et le deuxième moyen de conjugaison de puissance 83 comportent chacun un pignon engrenant simultanément le premier arbre de transmission 5 et le deuxième arbre de transmission 6.

Ainsi, la première extrémité 5' du premier arbre de transmission 5 et la première extrémité 6' du deuxième arbre de transmission 6 engrènent le premier moyen de conjugaison de puissance 73, alors que la deuxième extrémité 5" du premier arbre de transmission 5 et la deuxième extrémité 6" du deuxième arbre de transmission 6 engrènent le deuxième moyen de conjugaison de puissance 83.

La présence du premier arbre de transmission 5 et du deuxième arbre de transmission 6, montés en parallèle, permet au premier rotor 2 et au deuxième rotor 3 de continuer à être synchronisés en rotation dans le cas où un arbre de transmission 5 ou 6 viendrait à rompre. En effet, l'arbre de transmission restant peut assurer seul la synchronisation du premier rotor 2 et du deuxième rotor 3.

Contrairement à ce que l'on pourrait penser, la présence de deux arbres de transmission 5, 6 n'implique pas une hausse de masse, les premier et deuxième arbres de transmission 5, 6 pouvant être sous-dimensionnés dans la mesure où ils sont redondés.

Toutefois, si par exemple le premier arbre de transmission 5 venait à rompre, les diverses portions résultant de cette rupture pourraient endommager le dispositif, voire le bloquer.

Par suite, en référence à la figure 3, selon un premier mode de réalisation, le dispositif d'entraînement D comporte un premier et un deuxième moyens de retenue 15, 16 respectivement des premier et deuxième arbres de transmission 5,6.

Le premier moyen de retenue 15 et le deuxième moyen de retenue 16 comportent une pluralité de paliers 17. Les paliers étant répartis longitudinalement le long du premier arbre de transmission 5 et le long du deuxième arbre de transmission 6, ces paliers sont à même de guider en rotation les premier et deuxième arbres de transmission 5, 6, même en cas de défaillance, pour les contenir dans un volume prédéfini.

On note que la figure 3 présente un premier arbre de transmission 5 de type supercritique.

Ce premier arbre de transmission 5 supercritique comporte deux tronçons 51, 52 liés entre eux par des moyens usuels 53.

Chaque tronçon du premier arbre de transmission 5 est alors muni de deux paliers 17 et d'un amortisseur 54.

A contrario, le deuxième arbre de transmission 6 est de type subcritique. Ce deuxième arbre de transmission 6 subcritique comporte trois tronçons 61, 62, 63 liés entre eux par des moyens usuels 64. Chaque tronçon du deuxième arbre de transmission 6 est alors muni de trois paliers 17.

Bien évidemment, la figure 3 est donnée à titre illustrative. Au lieu de mettre en oeuvre des arbres de transmission de type différent, on préférera utiliser deux arbres de type identique, à savoir deux arbres supercritiques ou deux arbres subcritiques.

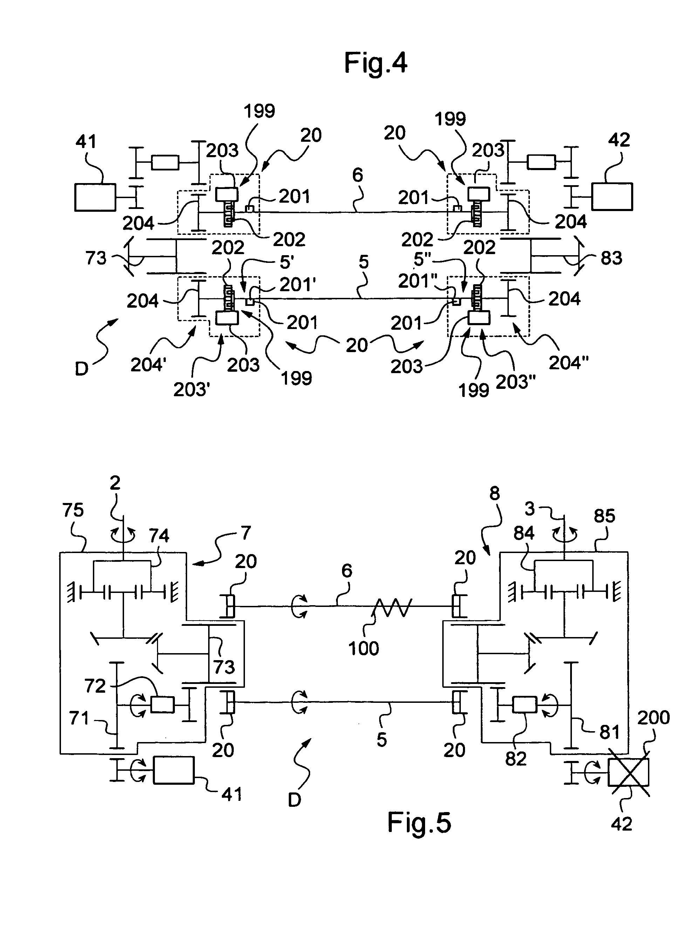

En référence à la figure 4, selon un deuxième mode de réalisation, on met en oeuvre au moins un système de désaccouplement d'urgence 20.

Ainsi, un système de désaccouplement d'urgence 20 est agencé entre chaque arbre de transmission 5, 6 et chaque moyen de conjugaison de puissance 73 et 83. Chaque système de désaccouplement d'urgence 20 permet, en cas de défaillance d'un arbre de transmission, de déconnecter l'arbre de transmission défaillant d'un moyen de conjugaison de puissance 73 et 83.

Chaque système de désaccouplement d'urgence 20 comporte alors un ensemble mécanique 199 pourvu d'un moyen de détection d'une rupture 201 de l'arbre de transmission associé, d'un accouplement par interférences de forme 202, d'un moyen de commande 203 et d'un arbre de liaison 204.

Dans le cas où un arbre de transmission vient à rompre, cet arbre de transmission va battre et générer des vibrations indues. Le moyen de détection 201 détecte ces vibrations et envoie un signal au moyen de commande 203 qui ordonne à l'accouplement par interférences de forme 202 de désolidariser l'arbre de transmission défaillant de l'arbre de liaison 204 en prise avec le moyen de conjugaison de puissance associé.

Par exemple, les moyens de détection 201', 201" du premier arbre de transmission 5 détectant des vibrations indues, les moyens de commande 203', 203" liés à ce premier arbre de transmission 5 ordonnent la déconnexion des arbres de liaison 204', 204" jusqu'alors solidarisés aux première et deuxième extrémités 5', 5" du premier arbre de transmission 5.

L'arbre de transmission 5 défaillant n'est donc plus entraîné ni par le premier moyen de conjugaison de puissance 73 ni par le deuxième moyen de conjugaison de puissance 83. Ainsi, il n'y aucun risque que l'arbre défaillant interfère dans le bon fonctionnement du giravion 1.

Eventuellement, il est possible de prévoir que la suite du vol, avec un unique arbre de transmission liant les premier et deuxième moyens de conjugaison de puissance, doit se dérouler dans un domaine de vol refuge restreint.

Si la rupture de l'arbre de transmission 5 n'était finalement pas avérée, on peut alors ordonner, de préférence au sol, à l'accouplement par interférences de forme 202 de solidariser l'arbre de transmission 5 que l'on croyait défaillant à l'arbre de liaison 204.

La figure 5 illustre une première variante du dispositif d'entraînement D selon l'invention. La première boîte de transmission principale 7 comporte un premier réducteur 71, un premier moyen de conjugaison de puissance 73 et un premier organe de transmission 74, le premier réducteur 71 comportant une première roue libre 72.

De même, la deuxième boîte de transmission principale 8 comporte un deuxième réducteur 81, un deuxième moyen de conjugaison de puissance 83 et un deuxième organe de transmission 84, le deuxième réducteur 81 comportant une deuxième roue libre 82.

Selon cette première variante, le dispositif d'entraînement D est muni d'un premier moteur 41 qui engrène le premier réducteur 71 avec un premier couple C1. Le premier réducteur 71 engrène le premier moyen de conjugaison de puissance 73 qui engrène le premier organe de transmission 74. Le premier organe de transmission 74 entraîne ainsi le premier rotor 2, ledit rotor 2 comportant des pales 102 assurant la sustentation et la propulsion du giravion 1.

Le premier moyen de conjugaison de puissance 73 engrène également les premier et deuxième arbres de transmission 5, 6.

Parallèlement, le dispositif d'entraînement D est muni d'un deuxième moteur 42 qui engrène le deuxième réducteur 81 avec un deuxième couple C2. Le deuxième réducteur 81 engrène le deuxième moyen de conjugaison de puissance 83 qui engrène le deuxième organe de transmission 84. Le deuxième organe de transmission 84 entraîne ainsi le deuxième rotor 3, ledit rotor 3 comportant des pales 103 assurant la sustentation voire la propulsion du giravion 1.

Le deuxième moyen de conjugaison de puissance 83 engrène également les premier et deuxième arbres de transmission 5,6, permettant au premier et deuxième moyens de conjugaison de puissance 73, 83 d'être reliés mécaniquement afin que les pales 102 du premier rotor 2 et les pales 103 du deuxième rotor 3 demeurent engrenantes en azimut de manière synchronisée en rotation.

Selon cette première variante, le premier arbre de transmission 5 et le deuxième arbre de transmission 6 sont parallèles et subissent chacun un couple ayant une première valeur $\dfrac{\Delta C}{2}$ où $\Delta C$ représente la différence de couple entre le premier couple C1 du premier moteur 41 et le deuxième couple C2 du deuxième moteur 42. On a alors : $|\Delta C| = |C1 - C2|$.

On note que la différence de couple $\Delta C$ varie en fonction de l'attitude du giravion.

Le premier moteur 41 et le deuxième moteur 42 ayant des puissances similaires, la première valeur $\dfrac{\Delta C}{2}$ est très faible, voire nulle. Selon la première variante, le premier arbre de transmission 5 et le deuxième arbre de transmission 6 ne sont donc pratiquement pas chargés en fonctionnement accouplé, c'est-à-dire lorsqu'aucun arbre de transmission n'est défaillant et qu'aucun moteur n'est défaillant.

Ainsi, les premier et deuxième arbres de transmission 5,6 peuvent présenter une masse minime, ces arbres de transmission ne devant pas être surdimensionnés.

De plus, la première boîte de transmission principale 7 et la deuxième boîte de transmission principale 8 sont agencées respectivement dans un premier carter de protection 75 et un deuxième carter de protection 85.

Le premier moteur 41 et le deuxième moteur 42 sont alors reliés respectivement au premier carter de protection 75 et au deuxième carter de protection 85.

Le premier carter de protection 75 est très rigide. Agencer la première boîte de transmission principale 7 à l'intérieur du premier carter de protection 75 et fixer le premier moteur 41 sur le premier carter de protection 75 permet à l'assemblage de bénéficier de la rigidité du premier carter de protection 75 afin d'obtenir un ensemble particulièrement raidi.

De même, le deuxième carter de protection 85 est très rigide. Agencer la deuxième boîte de transmission principale 8 à l'intérieur du deuxième carter de protection 85 et fixer le deuxième moteur 42 sur le deuxième carter de protection 85 permet à l'assemblage de bénéficier de la rigidité du deuxième carter de protection 85 afin d'obtenir un ensemble particulièrement raidi.

En outre, on note qu'il est avantageux d'équiper le dispositif d'entraînement D d'une pluralité de moteurs. Ainsi, si un moteur subit une panne 200, il faut pouvoir le déconnecter de la chaîne cinématique, un blocage du deuxième moteur 42 ne devant pas entraîner un blocage des premier et deuxième rotors.

Pour ce faire, une première roue libre 72 et une deuxième roue libre 82 sont agencées respectivement sur le premier réducteur 71 et le deuxième réducteur 81. La première roue libre 72 et la deuxième roue libre 82 permettent de désolidariser respectivement soit le premier moteur 41 soit le deuxième moteur 42 du reste du dispositif d'entraînement. Plus précisément, on désolidarise le moteur qui n'est plus à même de fournir un couple moteur suffisant pour entraîner le premier rotor 2 et le deuxième rotor 3.

Cette situation peut se produire dans le cas d'un moteur défaillant, voir arrêté. Toutefois, le premier moteur 41 et le deuxième moteur 42 ne pouvant tourner rigoureusement à la même vitesse, la première roue libre 72 et la deuxième roue libre 82 permettent au premier rotor 2 et au deuxième rotor 3 de tourner à la même vitesse, à savoir la vitesse de rotation induite par le moteur ayant la vitesse de rotation la plus importante.

Par exemple, dans l'hypothèse ou le premier moteur 41 tourne plus vite que le deuxième moteur 42, le premier moteur 41 entraîne les premier et deuxième rotors 2, 3, alors que la deuxième roue libre 82 désolidarise le deuxième moteur du reste du dispositif.

Dans le cas où un moteur subit une panne 200, le moteur restant assure seul l'entraînement des premier et deuxième rotors 2, 3 via les premier et deuxième arbres de transmission 5, 6.

Le moteur restant entraîne donc la boîte de transmission principale qui lui est associée ainsi que l'autre boîte de transmission principale via les premier et deuxième arbres de transmission 5, 6.

Dans ces conditions, les premier et deuxième arbres de transmission doivent chacun supporter un couple maximal équivalent à la moitié du couple développé par le moteur restant dans un régime d'urgence.

Par ailleurs, le dispositif D d'entraînement selon l'invention comprend un premier arbre de transmission 5 et un deuxième arbre de transmission 6 de sorte qu'en cas de défaillance d'un arbre de transmission 6, par exemple une rupture 100, l'autre arbre de transmission 5 assure la synchronisation en rotation du premier rotor 2 et du deuxième rotor 3. Or, le premier arbre de transmission 5 et le deuxième arbre de transmission 6 ont par construction, une vitesse de rotation généralement élevée en raison d'une recherche de légèreté de l'installation et d'efficacité de fonctionnement et participent aux progrès techniques.

Cependant, de tels systèmes tournant à grande vitesse sont en principe sensibles notamment aux effets de balourd, source vibratoire classique. Ainsi, la répartition de masse des parties tournantes autour de l'axe de rotation peut générer des effets d'inertie. Ces effets d'inertie introduisent alors des vibrations dans la structure porteuse ou des efforts cycliques dans les liaisons à l'origine de la rupture d'éléments constitutifs des systèmes tournants.

Dans ce cas, le centre d'inertie n'est plus sur l'axe de rotation lequel n'est plus sur l'axe principal d'inertie.

Bien entendu, lorsque les masses des éléments tournants sont régulièrement réparties autour de l'axe de rotation, les effets d'inertie résultants sont nuls : ces éléments sont dits équilibrés.

Sinon, il apparaît un balourd lequel correspond à la superposition d'un balourd « statique » et d'un balourd « dynamique ».

De ce fait, la fissuration ou la rupture d'un arbre de transmission peut provoquer des dégâts structuraux importants pouvant entraîner un blocage des autres éléments mobiles. Il est donc souhaitable d'éviter ces dégâts.

Dans le cas où un balourd est détecté sur l'un des arbres de transmission par un moyen de détection 201, un signal est envoyé au moyen de commande 203 qui ordonne à l'accouplement par interférences de forme 202 de désolidariser l'arbre de transmission présentant un balourd. Ledit arbre de transmission n'est donc plus entraîné ni par le premier moyen de conjugaison de puissance 73 ni par le deuxième moyen de conjugaison de puissance 83. Ainsi, il n'y a aucun risque que l'arbre défaillant interfère dans le bon fonctionnement du giravion 1.

L'arbre restant doit assurer seul la synchronisation des premier et deuxième rotors 2, 3 en assurant la transmission d'un faible couple.

Utiliser d'une part un premier moteur mettant en mouvement le premier organe de transmission en entraînant directement ou via un premier réducteur, un premier élément mécanique comprenant un ensemble mécanique d'un système de désaccouplement d'urgence agencé à une première extrémité d'un arbre de transmission, ou le premier moyen de conjugaison de puissance ou encore le premier arbre de transmission, et, d'autre part un deuxième moteur mettant en mouvement ledit deuxième organe de transmission en entraînant directement, ou via un deuxième réducteur, un deuxième élément mécanique, comprenant un ensemble mécanique d'un système de désaccouplement d'urgence agencé à une deuxième extrémité d'un arbre de transmission, ou ledit deuxième moyen de conjugaison de puissance ou ledit deuxième arbre de transmission, permet donc de minimiser le couple que lesdits premier et deuxième arbres de transmission doivent supporter, même en cas de rupture d'un arbre de transmission ou d'une panne d'un moteur.

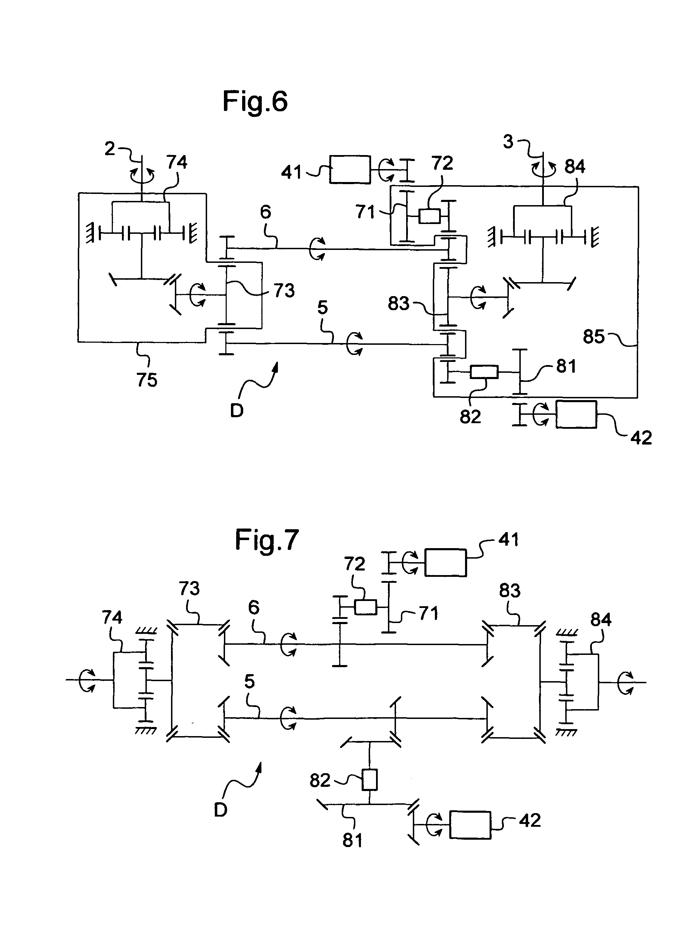

La figure 6 présente une deuxième variante du dispositif d'entraînement D. Cette deuxième variante est similaire à la première variante mais présente une disposition différente des premier et deuxième moteurs 41, 42. Selon cette deuxième variante, le premier moteur 41 et le deuxième moteur 42 sont respectivement en prise avec les deuxièmes extrémités des premier et deuxième arbres de transmission 5, 6, engrenant le deuxième moyen de conjugaison de puissance 83.

Dans cette deuxième variante, le premier carter 75 est agencé autour de la boîte de transmission principale 7 et le deuxième carter 85 est agencé autour de la boîte de transmission principale 8. Le deuxième carter 85 comporte en outre les premier et deuxième réducteurs 71, 81. Afin de rigidifier l'ensemble des éléments composant le dispositif d'entraînement D, en bénéficiant de la rigidité du deuxième carter 85, les premier et deuxième moteurs 41, 42 sont fixés au deuxième carter 85.

La figure 7 présente une troisième variante du dispositif d'entraînement D. Cette troisième variante est similaire à la première variante mais présente une disposition différente des moteurs 41 et 42. Selon cette troisième variante, le premier moteur 41 et le deuxième moteur 42 entraînent respectivement le premier arbre de transmission 5 et le deuxième arbre de transmission 6 via leurs zones médianes 5''', 6'''.

Le premier moteur 41 engrène le premier réducteur 71, qui entraîne le premier arbre de transmission 5 par sa zone médiane 5'''.

Parallèlement, le deuxième moteur 42 engrène le deuxième réducteur 81, qui entraîne le deuxième arbre de transmission 6 par sa zone médiane 6'''.

Les premier et deuxième arbres de transmission entraînent conjointement les première et deuxième moyens de conjugaison de puissance 73, 83. Lesdits premier et deuxième moyens de conjugaison de puissance 73, 83 entraînent respectivement les premier et deuxième organes de transmission, entraînant respectivement les premier et deuxième rotors 2, 3.

On remarque que le premier réducteur comporte des pignons droits alors que le deuxième réducteur est muni de pignons coniques.

Toutefois, on utilisera si possible le même type de pignons pour les premier et deuxième réducteurs.

Naturellement, la présente invention est sujette à de nombreuses variations quand à sa mise en oeuvre.

Bien que plusieurs variantes et modes de réalisation aient été décrits, on comprend bien qu'il n'est pas concevable d'identifier de manière exhaustive toutes les variantes et tous les modes possibles. Il est bien sûr envisageable de remplacer un moyen décrit par un moyen équivalent sans sortir du cadre de la présente invention.

A ce titre, il est bien évident, par exemple, que certaines variantes de réalisation peuvent comporter un nombre de moteurs supérieur à deux et présenter des positions spécifiques quel que soit leur nombre.

Par ailleurs, les figures présentent un giravion muni d'un premier et d'un deuxième rotors contrarotatifs.

Néanmoins, ces rotors pourraient avoir un sens de rotation identique. Dans ce cas de figure, les axes de rotation des premier et deuxième rotors présenteraient respectivement une première et une deuxième angulations avec un plan verticale défini par les axes de roulis et de lacet du giravion, les première et deuxième angulations ayant des valeurs opposées.


## Revendications

**1.** Dispositif d'entraînement (D) d'un premier et d'un deuxième rotors de sustentation (2, 3) d'un giravion birotor, ledit dispositif (D) étant muni d'une première et d'une deuxième boîtes de transmission principale (7, 8) pourvues respectivement d'un premier et d'un deuxième organes de transmission (74, 84) aptes à mettre en rotation lesdits premier et deuxième rotors (2, 3), ledit dispositif d'entraînement (D) comportant au moins un moteur (41, 42) pour entraîner lesdites premier et deuxième organes de transmission (74, 84),
**caractérisé en ce qu'**il comporte un moyen de liaison muni d'un premier et d'un deuxième arbres de transmission (5, 6) pour synchroniser lesdits premier et deuxième organes de transmission (74, 84), ladite première boîte de transmission principale (7) étant pourvue d'un premier moyen de conjugaison de puissance (73) d'une part en prise avec ledit premier organe de transmission (74) et d'autre part mécaniquement lié audit premier arbre de transmission (5) et audit deuxième arbre de transmission (6), ladite deuxième boîte de transmission principale (8) étant pourvue d'un deuxième moyen de conjugaison de puissance (83) d'une part en prise avec ledit deuxième organe de transmission (84) et d'autre part mécaniquement lié audit premier arbre de transmission (5) et audit deuxième arbre de transmission (6).

**2.** Dispositif (D) selon la revendication 1,
**caractérisé en ce qu'**au moins un arbre de transmission (5, 6) comporte plusieurs tronçons.

**3.** Dispositif (D) selon l'une quelconque des revendications 1 à 2,
**caractérisé en ce qu'**il comporte un moyen de retenue (15, 16) d'au moins un arbre de transmission (5, 6).

**4.** Dispositif (D) selon l'une quelconque des revendications 1 à 3,
**caractérisé en ce qu'**il comporte au moins un système de désaccouplement d'urgence (20), chaque système de désaccouplement d'urgence (20) étant muni d'un ensemble mécanique (199) agencé entre une extrémité (5', 5", 6', 6") d'un arbre de transmission (5, 6) et le moyen de conjugaison de puissance associé (73, 83) pour lier mécaniquement ledit arbre de transmission (5, 6) audit moyen de conjugaison de puissance (73, 83) dans un mode de fonctionnement accouplé.

**5.** Dispositif (D) selon la revendication 4,
**caractérisé en ce que** ledit ensemble mécanique (199) est pourvu d'un accouplement par interférences de forme (202) et d'un arbre de liaison (204).

**6.** Dispositif (D) selon l'une quelconque des revendications 4 ou 5,
**caractérisé en ce que** ledit système de désaccouplement d'urgence (20) comporte un moyen de commande (203) et un moyen de détection (201) d'une rupture dudit arbre de transmission (5, 6), ledit moyen de commande (203) ordonnant à l'ensemble mécanique (199) de ne plus lier mécaniquement l'arbre de transmission à un moyen de conjugaison de puissance en cas de rupture.

**7.** Dispositif (D) selon la revendication 6,
**caractérisé en ce que** ledit moyen de détection (201) est un capteur de vibrations.

**8.** Dispositif (D) selon l'une quelconque des revendications précédentes,
**caractérisé en ce que**, ledit dispositif comportant au moins un système de désaccouplement d'urgence (20) muni d'un ensemble mécanique (199) agencé entre une extrémité (5', 5", 6', 6") d'un arbre de transmission (5, 6) et le moyen de conjugaison de puissance associé (73, 83), au moins un moteur entraîne en rotation ledit ensemble mécanique (199) qui met en mouvement le moyen de conjugaison de puissance auquel cet ensemble mécanique (199) est mécaniquement lié.

**9.** Dispositif (D) selon l'une quelconque des revendications précédentes,
**caractérisé en ce qu'**au moins un moteur entraîne en rotation un moyen de conjugaison de puissance (73, 83) qui met à son tour en mouvement lesdits premier et deuxième arbres de transmission (5, 6).

**10.** Dispositif (D) selon l'une quelconque des revendications précédentes,

**caractérisé en ce qu'**au moins un moteur entraîne un arbre de transmission (5, 6) qui met en mouvement lesdits premier et deuxièmes moyens de conjugaison de puissance.

11. Dispositif (D) selon l'une quelconque des revendications 8 à 10,
    **caractérisé en ce que**, au moins un premier et un deuxième moteurs entraînant lesdits premier et deuxième organes de transmission (74, 84), ledit premier moteur met en mouvement ledit premier organe de transmission (74) en entrainant directement un premier élément mécanique comprenant soit un ensemble mécanique (199) d'un système de désaccouplement d'urgence (20) agencé à une première extrémité d'un arbre de transmission soit ledit premier moyen de conjugaison de puissance (73) ou soit ledit premier arbre de transmission (5), ledit deuxième moteur mettant en mouvement ledit deuxième organe de transmission (84) en entrainant directement un deuxième élément mécanique comprenant soit un ensemble mécanique (199) d'un système de désaccouplement d'urgence (20) agencé à une deuxième extrémité d'un arbre de transmission soit ledit deuxième moyen de conjugaison de puissance (83) soit ledit deuxième arbre de transmission (6).

12. Dispositif (D) selon l'une quelconque des revendications 8 à 10,
    **caractérisé en ce que**, au moins un premier et un deuxième moteurs entraînant lesdits premier et deuxième organes de transmission (74, 84), ledit premier moteur met en mouvement ledit premier organe de transmission (74) en entrainant un premier élément mécanique, comprenant soit un ensemble mécanique (199) d'un système de désaccouplement d'urgence (20) agencé à une première extrémité d'un arbre de transmission soit ledit premier moyen de conjugaison de puissance (73) ou soit ledit premier arbre de transmission (5), via un premier réducteur (71), ledit deuxième moteur mettant en mouvement ledit deuxième organe de transmission (84) en entrainant un deuxième élément mécanique, comprenant soit un ensemble mécanique (199) d'un système de désaccouplement d'urgence (20) agencé à une deuxième extrémité d'un arbre de transmission soit ledit deuxième moyen de conjugaison de puissance (83) ou soit ledit deuxième arbre de transmission (6), via un deuxième réducteur (72).

13. Dispositif (D) selon l'une quelconque des revendications précédentes,
    **caractérisé en ce que** au moins un moteur entraînant lesdits premier et deuxième organes de transmission (74, 84) via un élément mécanique comprenant un ensemble mécanique (199) d'un système de désaccouplement d'urgence (20) ou un moyen de conjugaison de puissance (73, 83) ou un arbre de transmission (5, 6), un réducteur (71, 81) muni d'une roue libre (72, 82) est agencé entre ledit moteur et ledit élément mécanique.

14. Dispositif (D) selon l'une quelconque des revendications précédentes,
    **caractérisé en ce que** chaque boîte de transmission principale comporte un carter entourant l'organe de transmission et le moyen de conjugaison de puissance de ladite boîte de transmission principale.

15. Dispositif (D) selon l'une quelconque des revendications précédentes,
    **caractérisé en ce que**, ledit organe de transmission d'une boîte de transmission principale étant entraîné par un moteur via un réducteur muni d'une roue libre, ledit réducteur est agencé à l'intérieur dudit carter, ledit moteur étant fixé sur ce carter.

**Claims**

1. A device (D) for driving first and second main rotors (2, 3) of a birotor rotorcraft, the said device (D) being equipped with a first and a second main gearbox (7, 8) which are respectively provided with a first and a second transmission member (74, 84) suitable for rotating the said first and second rotors (2, 3), the said driving device (D) including at least one motor (41, 42) for driving the said first and second transmission members (74, 84), **characterised in that** it includes a linking means equipped with a first and a second transmission shaft (5, 6) for synchronising the said first and second transmission members (74, 84), the said first main gearbox (7) being provided with a first means (73) for combining power which is on the one hand in engagement with the said first transmission member (74) and on the other linked mechanically to the said first transmission shaft (5) and the said second transmission shaft (6), the said second main gearbox (8) being provided with a second means (83) for combining power which is on the one hand in engagement with the said second transmission member (84) and on the other linked mechanically to the said first transmission shaft (5) and the said second transmission shaft (6).

2. A device (D) according to Claim 1, **characterised in that** at least one transmission shaft (5, 6) includes a plurality of sections.

3. A device (D) according to either of Claims 1 and 2, **characterised in that** it includes a means (15, 16) of containing at least one transmission shaft (5, 6).

4. A device (D) according to any one of Claims 1 to 3, **characterised in that** it includes at least one emergency uncoupling system (20), each emergency uncoupling system (20) being equipped with a mechanical assembly (199) arranged between one end (5', 5", 6', 6") of a transmission shaft (5, 6) and the associated means (73, 83) for combining power, for mechanically linking the said transmission shaft (5, 6) to the said means (73, 83) for combining power in a coupled operating mode.

5.   A device (D) according to Claim 4, **characterised in that** the said mechanical assembly (199) is provided with a coupling (202) by means of shape interference and a linking shaft (204).

6.   A device (D) according to either of Claims 4 and 5, **characterised in that** the said emergency uncoupling system (20) includes a control means (203) and a means (201) of detecting a break in the said transmission shaft (5, 6), in which if there is a break the said control means (203) sends a command to the mechanical assembly (199) such that it no longer mechanically links the transmission shaft to a means for combining power.

7.   A device (D) according to Claim 6, **characterised in that** the said detecting means (201) is a vibration sensor.

8.   A device (D) according to any one of the preceding claims, **characterised in that**, with the said device including at least one emergency uncoupling system (20) equipped with a mechanical assembly (199) arranged between one end (5', 5", 6', 6") of a transmission shaft (5, 6) and the associated means (73, 83) for combining power, at least one motor rotates the said mechanical assembly (199), which triggers movement in the means for combining power to which this mechanical assembly (199) is linked mechanically.

9.   A device (D) according to any one of the preceding claims, **characterised in that** at least one motor rotates a means (73, 83) for combining power, which in turn triggers movement in the said first and second transmission shafts (5, 6).

10.  A device (D) according to any one of the preceding claims, **characterised in that** at least one motor drives a transmission shaft (5, 6), which triggers movement in the said first and second means for combining power.

11.  A device (D) according to any one of Claims 8 to 10, **characterised in that**, with at least one first and one second motor driving the said first and second transmission members (74, 84), the said first motor triggers movement in the said first transmission member (84) by directly driving a first mechanical element which comprises either a mechanical assembly (199) of an emergency uncoupling system (20) arranged at a first end of a transmission shaft, or the said first means (73) for combining power, or indeed the said first transmission shaft (5), with the said second motor triggering movement in the said second transmission member (84) by directly driving a second mechanical element which comprises either a mechanical assembly (199) of an emergency uncoupling system (20) arranged at a second end of a transmission shaft, or the said second means (83) for combining power, or the said second transmission shaft (6).

12.  A device (D) according to any one of Claims 8 to 10, **characterised in that**, with at least one first and one second motor driving the said first and second transmission members (74, 84), the said first motor triggers movement in the said first transmission member (84) by driving a first mechanical element which comprises either a mechanical assembly (199) of an emergency uncoupling system (20) arranged at a first end of a transmission shaft, or the said first means (73) for combining power, or indeed the said first transmission shaft (5), via a first reducing gear (71), with the said second motor triggering movement in the said second transmission member (84) by driving a second mechanical element which comprises either a mechanical assembly (199) of an emergency uncoupling system (20) arranged at a second end of a transmission shaft, or the said second means (83) for combining power, or the said second transmission shaft (6), via a second reducing gear (72).

13.  A device (D) according to any one of the preceding claims, **characterised in that**, with at least one motor driving the said first and second transmission members (74, 84) via a mechanical element which comprises a mechanical assembly (199) of an emergency uncoupling system (20) or a means (73, 83) for combining power or a transmission shaft (5, 6), a reducing gear (71, 81) equipped with a freewheel (72, 82) is arranged between the said motor and the said mechanical element.

14.  A device (D) according to any one of the preceding claims, **characterised in that** each main gearbox includes a casing which surrounds the transmission member and the means for combining power of the said main gearbox.

15.  A device (D) according to any one of the preceding claims, **characterised in that**, with the said transmission member of a main gearbox being driven by a motor via a reducing gear equipped with a freewheel, the said reducing gear is arranged inside the said casing, with the said motor fixed to this casing.

**Patentansprüche**

1. Vorrichtung (D) zum Antrieb eines ersten und eines zweiten Auftriebsrotors (2, 3) eines Drehflügelflugzeugs mit zwei Rotoren, wobei die Vorrichtung (D) mit einem ersten und einem zweiten Hauptgetriebe (7, 8) versehen ist, die mit einem ersten beziehungsweise einem zweiten Übertragungsorgan (74, 84) versehen sind, die die ersten und zweiten Rotoren (2, 3) in eine Drehbewegung versetzen können, wobei die Vorrichtung zum Antrieb (D) mindestens einen Motor (41, 42) zum Antreiben der ersten und zweiten Übertragungsorgane (74, 84) aufweist, **gekennzeichnet durch** ein Verbindungsmittel, welches mit einer ersten und einer zweiten Übertragungswelle (5, 6) versehen ist, um die ersten und zweiten Übertragungsorgane (74, 84) zu synchronisieren, wobei das erste Hauptgetriebe (7) mit einem ersten Kraftvereinigungsmittel (73) versehen ist, welches einerseits in Eingriff mit dem ersten Übertragungsorgan (74) steht und andererseits mechanisch mit der ersten Übertragungswelle (5) und mit der zweiten Übertragungswelle (6) verbunden ist, wobei das zweite Hauptgetriebe (8) mit einem zweiten Kraftvereinigungsmittel (83) versehen ist, welches einerseits mit dem zweiten Übertragungsorgan (84) in Eingriff steht und andererseits mechanisch mit der ersten Übertragungswelle (5) und der zweiten Übertragungswelle (6) verbunden ist.

2. Vorrichtung (D) nach Anspruch 1, **dadurch gekennzeichnet, dass** mindestens eine Übertragungswelle (5, 6) mehrere Abschnitte aufweist.

3. Vorrichtung (D) nach einem der Ansprüche 1 oder 2 **gekennzeichnet durch** ein Haltemittel (15, 16) mindestens einer Übertragungswelle (5, 6).

4. Vorrichtung (D) nach einem der Ansprüche 1 bis 3, **gekennzeichnet durch** mindestens ein Schnellentkopplungssystem (20) wobei jedes Schnellentkopplungssystem (20) mit einer mechanischen Anordnung (199) versehen ist, die zwischen einem Ende (5', 5", 6', 6") einer Übertragungswelle (5, 6) und dem damit verbundenen Kraftvereinigungsmittel (73, 83) angeordnet, ist um die Übertragungswelle (5, 6) mechanisch mit dem Kraftvereinigungsmittel (73, 83) in einem gekoppelten Betriebszustand zu verbinden.

5. Vorrichtung (D) nach Anspruch 4, **dadurch gekennzeichnet, dass** die mechanische Anordnung (199) mit einer Formschlusskupplung (202) und einer Verbindungswelle (204) versehen ist.

6. Vorrichtung (D) nach einem der Ansprüche 4 oder 5, **dadurch gekennzeichnet, dass** das Schnellentkopplungssystem (20) ein Steuermittel (203) und ein Mittel (201) zum Erfassen eines Bruchs der Übertragungswelle (5, 6) aufweist, wobei das Steuermittel (203) and die mechanische Anordnung (199) den Befehl ausgibt wenn ein Bruch auftritt die Übertragungswelle nicht mehr mit einem Mittel zur Kraftvereinigung zu verbinden.

7. Vorrichtung (D) nach Anspruch 6, **dadurch gekennzeichnet, dass** das Mittel zum Erfassen (201) ein Vibrationssensor ist.

8. Vorrichtung (D) nach einem der vorstehenden Ansprüche, **dadurch gekennzeichnet, dass** die Vorrichtung mindestens ein Schnellentkopplungssystem (20) aufweist, welches eine mechanische Anordnung (199) umfasst, die zwischen einem Ende (5', 5 ", 6', 6") einer Übertragungswelle (5, 6) und dem zugehörigen Mittel zur Kraftvereinigung (73, 83) angeordnet ist, wobei mindestens ein Motor die mechanische Anordnung (199) in eine Drehbewegung versetzt, und wobei die mechanische Anordnung das Mittel zur Vereinigung der Kraft in Bewegung versetzt, mit welchem diese mechanische Anordnung (199) mechanisch verbunden ist.

9. Vorrichtung (D) nach einem der vorstehenden Ansprüche, **dadurch gekennzeichnet, dass** mindestens ein Motor ein Mittel zur Vereinigung der Kraft (73, 83) antreibt, das wiederum die ersten und zweiten Übertragungswellen (5, 6) antreibt.

10. Vorrichtung (D) nach einem der vorstehenden Ansprüche, **dadurch gekennzeichnet, dass** mindestens ein Motor eine Übertragungswelle (5, 6) antreibt, die die ersten und zweiten Mittel zur Kraftvereinigung in Bewegung versetzt.

11. Vorrichtung (D) nach einem der Ansprüche 8 bis 10, **dadurch gekennzeichnet, dass** mindestens ein erster und ein zweiter Motor die ersten und zweiten Übertragungsorgane (74, 84) antreiben, wobei der erste Motor das erste Übertragungsorgan (74) antreibt, indem direkt ein erstes mechanisches Element angetrieben wird, welches entweder eine mechanische Anordnung (199) eines Schnellentkopplungssystems (20) aufweist, welches an einem ersten Ende einer Übertragungswelle angeordnet ist oder das erste Mittel zur Kraftvereinigung (73) oder die erste Übertragungswelle (5) aufweist, wobei der zweite Motor das zweite Übertragungsorgan (84) in Bewegung versetzt indem es direkt ein zweites mechanisches Element antreibt, welches entweder eine mechanische Anordnung (199) eines Schnellentkopplungssystems (20) aufweist, welches an einem zweiten Ende einer Übertragungswelle angeordnet ist, oder das zweite Mittel zur Kraftvereinigung (83) oder die zweite Übertragungswelle (6).

12. Vorrichtung (D) nach einem der Ansprüche 8 bis 10, **dadurch gekennzeichnet, dass** mindestens ein erster und ein zweiter Motor die ersten und zweiten Übertragungsorgane (74, 84) antreiben, wobei der erste Motor das erste Übertragungsorgan (74) in Bewegung versetzt indem es ein erstes mechanisches Element antreibt, welches entweder eine mechanische Anordnung (199) eines Schnellentkopplungssystems (20), welches an einem ersten Ende einer Übertragungswelle angeordnet ist aufweist, oder das erste Mittel zur Kraftvereinigung (73) oder die erste Übertragungswelle (5), über ein erstes Reduktionsgetriebe (71), wobei der zweite Motor das zweite Übertragungsorgan (84) in Bewegung versetzt, indem er ein zweites mechanisches Element antreibt, welches entweder eine mechanische Anordnung (199) eines Schnellentkopplungssystems (20) aufweist, welches an einem zweiten Ende einer Übertragungswelle angeordnet ist, oder das zweite Mittel zur Kraftvereinigung (83) oder die zweite Übertragungswelle (6) über ein zweites Reduktionsgetriebe (72).

13. Vorrichtung (D) nach einem der vorstehenden Ansprüche, **dadurch gekennzeichnet, dass** mindestens ein Motor, der die ersten und zweiten Übertragungsorgane (74, 84) über ein mechanisches Element antreibt, welches eine mechanische Anordnung (199) eines Schnellentkopplungssystems (20) aufweist oder ein Mittel zur Kraftvereinigung (73, 83) oder eine Übertragungswelle (5, 6), vorgesehen ist, wobei ein Reduktionsgetriebe (71, 81) mit einem Freilauf (72, 82) zwischen dem Motor und dem mechanischen Element angeordnet ist.

14. Vorrichtung (D) nach einem der vorstehenden Ansprüche, **dadurch gekennzeichnet, dass** jedes Hauptgetriebe ein Gehäuse aufweist, welches das Übertragungsorgan und das Mittel zur Kraftvereinigung des Hauptgetriebes umschließt.

15. Vorrichtung (D) nach einem der vorstehenden Ansprüche, **dadurch gekennzeichnet, dass** das Übertragungsorgan eines Hauptgetriebes durch einen Motor über ein Reduziergetriebe angetrieben wird, welches mit einem Freilauf versehen ist, wobei das Reduziergetriebe im Inneren des Gehäuses angeordnet ist und der Motor am Gehäuse befestigt ist.

Fig.1

Fig.2

Fig.3

## Fig.4

## Fig.5

# Fig.6

# Fig.7

**EP 2 174 868 B1**